# EUROPÄISCHE PATENTSCHRIFT

(11) **EP 0 692 042 B1**
(45) Veröffentlichungstag und Bekanntmachung des Hinweises auf die Patenterteilung: **06.11.1996**
(21) Anmeldenummer: 94911934.1
(22) Anmeldetag: 21.03.1994
(51) Int. Cl.: D06P 1/22, D06P 5/20

(54) **VERFAHREN ZUM FÄRBEN VON CELLULOSEHALTIGEM TEXTILMATERIAL MIT HYDRIERTEM INDIGO**
METHOD OF DYEING CELLULOSE-CONTAINING TEXTILE MATERIAL WITH HYDROGENATED INDIGO
PROCEDE PERMETTANT DE TEINDRE UN MATERIAU TEXTILE CONTENANT DE LA CELLULOSE AVEC DE L'INDIGO HYDROGENE

(30) Priorität: 30.03.1993 DE 4310122; 12.05.1993 DE 4315873
(43) Veröffentlichungstag der Anmeldung: 17.01.1996
(73) Patentinhaber: BASF AKTIENGESELLSCHAFT, 67056 Ludwigshafen (DE)
(72) Erfinder: SCHNITZER, Georg, D-67273 Weisenheim (DE); SUETSCH, Franz, D-67127 Roedersheim-Gronau (DE); SCHMITT, Michael, D-67549 Worms (DE); KROMM, Erich, D-67256 Weisenheim (DE); SCHLUETER, Harald, D-67273 Weisenheim (DE); KRUEGER, Rudolf, D-67273 Weisenheim (DE); WEIPER-IDELMANN, Andreas, D-68163 Mannheim (DE)
(86) Internationale Anmeldenummer: EP9400873
(87) Internationale Veröffentlichungsnummer: WO9423114

(56) Entgegenhaltungen:
- WO-A-90/15182
- FR-A- 2 265 901
- M. PETER & H. K. ROUETTE 'Grundlagen der Textilveredlung' 1989 , DEUTSCHER FACHVERLAG , FRANKFURT AM MAIN, DE siehe Seite 500-2, Absatz 7.222113 siehe im besonderen Seite 501 rechte Spalte
- DATABASE WPI Section Ch, Week 8618, Derwent Publications Ltd., London, GB; Class A35, AN 86-117848 & SU,A,1 183 585 (TADZ UNIV) 7. Oktober 1985
- DATABASE WPI Section Ch, Week 8618, Derwent Publications Ltd., London, GB;
- Class A35, AN 86-117848 & SU,A,1 183 585 (TADZ UNIV) 7. Oktober 1985

## Beschreibung

Die vorliegende Erfindung betrifft ein verbessertes Verfahren zum Färben von cellulosehaltigem Textilmaterial mit Indigo.

Indigo stellt einen seit langer Zeit bekannten Küpenfarbstoff dar, der zum Färben von cellulosehaltigem Textilmaterial, insbesondere von Baumwoll-Kettgarnen für Blue-denim-Artikel eingesetzt wird.

Zum Färben muß der wasserunlösliche Indigo zunächst durch Reduktion (Verküpen) in die wasserlösliche Leukoform überführt werden, die dann nach dem Aufziehen auf das zu färbende Material wieder zum Pigment oxidiert wird.

Bei den üblichen Färbeverfahren wird Indigo in einem dem Färbebad vorgelagerten Behälter in alkalischem Medium durch Zugabe von anorganischen Reduktionsmitteln wie Natriumdithionit und Thioharnstoffdioxid oder auch organischen Reduktionsmitteln wie Hydroxyaceton verküpt. Zusätzliche maschinenabhängige Anteile Reduktionsmittel werden während des Färbens verbraucht, da ein Teil des Leukoindigos durch den Luftkontakt in den Luftgängen und an der Färbebadoberfläche oxidiert wird und wieder verküpt werden muß, weshalb auch dem Färbebad Reduktionsmittel zugesetzt wird (bis zu 70 % des Gesamtbedarfs).

Nachteilig bei der Verküpung des Indigos mit den genannten Reduktionsmitteln ist die hohe Belastung des Färbeabwassers durch Sulfat (etwa 3500 bis 5000 mg/l, gemessen im Abwasser einer Indigofärberei) im Fall von Natriumdithionit bzw. durch Sauerstoff verbrauchende Substanzen (CSB-Werte von ca. 8000 mg/l, gemessen im Abwasser einer Indigofärberei) im Fall von Hydroxyaceton. Zusätzlich erfordert die Reduktion z.B. mit Natriumdithionit einen hohen Alkalizusatz.

Weiterhin sind auch feste bis pastenartige Präparationen von Leukoindigo bekannt, die neben Alkali insbesondere von Zuckern abgeleitete Polyhydroxyverbindungen, insbesondere Melasse, als Stabilisatoren enthalten, die eine Oxidation zum Indigo verhindern sollen. Wenn diese Präparationen zum Färben eingesetzt werden, kann der Sulfatgehalt des Färbeabwassers zwar wirkungsvoll gesenkt werden, jedoch resultiert eine hohe Belastung des Abwassers durch gelöste organische Hydroxyverbindungen, gemessen als TOC (Total Organic Carbon), CSB (Chemischer Sauerstoffbedarf) oder BSB (Biologischer Sauerstoffbedarf); beispielsweise ergibt sich bei einer 60 gew.-%igen Leukoindigopräparation mit 25 Gew.-% Melasse ein CSB-Wert von etwa 8000 mg/l. Außerdem vermindert Melasse die Reduktionswirkung des dem Färbebad zugesetzten Reduktionsmittels (vor allem von Natriumdithionit und Thioharnstoffdioxid) und stört die Einstellung des für das Färben optimalen pH-Wertes, so daß auf diese Weise nicht zufriedenstellende Ergebnisse, u.a. verwaschenes Warenbild und mangelnde Brillanz der Färbung, erhalten werden.

Schließlich ist aus der WO-A-90/15182 auch ein Färbeverfahren bekannt, bei dem Indigo dem Färbebad in oxidierter Form zugesetzt und im Färbebad elektrochemisch reduziert wird, wobei sog. Mediatoren verwendet werden. Bei den Mediatoren handelt es sich um reversible Redoxsysteme, die den Farbstoff reduzieren, dabei oxidiert werden, an der Kathode wieder reduziert werden und erneut zur Farbstoffreduktion zur Verfügung stehen. Um jedoch die gesamte zum Färben notwendige Indigomenge zu reduzieren, sind enorme Ladungsmengen und große Elektrodenoberflächen erforderlich. Zudem müssen der Färbelösung größere Mengen Leitsalz zugesetzt werden (etwa 1,5 g/l NaOH, 30 g/l Na2SO4), um eine ausreichende elektrische Leitfähigkeit zu gewährleisten und damit die Widerstandsverluste und auch die Elektrodenoberflächen möglichst klein zu halten. Das führt wiederum zu einer unerwünschten Sulfatbelastung des Färbeabwassers.

Der Erfindung lag daher die Aufgabe zugrunde, das Färben mit Indigo ohne die genannten Nachteile und in ökologisch vorteilhafter Weise zu ermöglichen.

Demgemäß wurde ein Verfahren zum Färben von cellulosehaltigem Textilmaterial mit Indigo gefunden, welches dadurch gekennzeichnet ist, daß man hierfür eine wäßrige Lösung von durch katalytische Hydrierung hergestelltem Leukoindigo verwendet und diesen nach dem Aufziehen auf das Textilmaterial in üblicher Weise durch Luftoxidation wieder in die Pigmentform überführt.

Beim erfindungsgemäßen Färbeverfahren werden vorteilhaft wäßrige Leukoindigolösungen eingesetzt, wie sie bei der katalytischen Hydrierung von Indigo anfallen. Überraschend ist, daß diese Lösungen im Gegensatz zu alkalischen Lösungen von Indoxyl, der letzten Vorstufe bei der Indigosynthese, unter Luftausschluß stabil sind.

Die Leukoindigolösungen enthalten in der Regel 10 bis 35, bevorzugt 10 bis 25 und besonders bevorzugt 15 bis 20 Gew.-% Leukoindigo.

Der Alkaligehalt, insbesondere der Natriumbydroxidgehalt, beträgt im allgemeinen 2 bis 10, bevorzugt 4 bis 5 Gew.-%. Ist für die Färbung ein höherer Alkaligehalt erwünscht, so kann dieser durch weitere Alkalizugabe zu der Leukoindigolösung oder zum Färbebad problemlos eingestellt werden.

Die Löslichkeit des Leukoindigos in diesen Lösungen ist deutlich höher als in den sog. Stammküpen oder Nachsatzküpen beim herkömmlichen Färben mit Indigo, die auf umständliche Weise durch Mischen von Wasser, pulverförmigem Indigo, Natronlauge und Natriumdithionit angesetzt werden, und liegt in der Regel bei > 200 g/l im Vergleich zu 80 bis 100 g/l in einer Stammküpe. Damit verringert sich das Dosiervolumen, und das Überlaufen von Färbebädern kann vermieden werden.

Die Herstellung der Leukoindigolösungen durch katalytische Hydrierung von Indigo kann in allgemein bekannter Weise erfolgen, insbesondere durch Reduktion eines alkalischen Indigoteigs (üblicherweise 10 bis 35 Gew.-% Indigo, 2 bis 10 Gew.-% Natriumhydroxid) unter Verwendung von Raney-Nickel als Katalysator bei einem Wasserstoffdruck von im allgemeinen 2 bis 4 bar und einer Temperatur von in der Regel 60 bis 90°C.

Nach anschließendem Klären wird die erhaltene Leukoindigolösung zweckmäßigerweise unter Luftausschluß und unter Inertgas, vorzugsweise unter einem Stickstoff-Druck von etwa 0,1 bar, in Tanks abgefüllt. Um die Gefahr der Oxidation durch ungewollt hinzutretende Luft zu verringern, können zusätzlich etwa 0,05 bis 0,2 Gew.-% eines Reduktionsmittels und/oder einer Sauerstoff absorbierenden Substanz zugesetzt werden. Als Reduktionsmittel eignen sich hierfür z.B. Natriumdithionit, Thioharnstoffdioxid, Sulfinsäurederivate sowie organische Reduktionsmittel entsprechend den älteren, nicht vorveröffentlichten Patentanmeldungen DE-A- 42 08 757 und 42 30 870.

Das Färben selbst kann in für das Färben mit Indigo üblicher Weise vorgenommen werden, wobei vorzugsweise kontinuierlich gearbeitet wird.

Das Ansetzen der Stammküpe entfällt jedoch, stattdessen muß nur die Leukoindigolösung dem Färbebad zudosiert werden. Lediglich während des Färbevorgangs besteht wie beim herkömmlichen Verfahren ein geringer Bedarf an zusätzlichem Reduktionsmittel (z.B. Natriumdithionit), um den durch Luftkontakt in den Luftgängen und an der Oberfläche des Färbebads entstehenden Indigo wieder zu reduzieren. Die hierfür erforderliche Menge an Hydrosulfit entspricht jedoch nur einem Drittel bis der Hälfte der bei herkömmlicher Arbeitsweise benötigten Menge.

Nach Abquetschen und Luftoxidation kann die Färbung dann wie üblich durch Waschen und Trocknen fertiggestellt werden.

Bei einer besonderen Ausführungsform des erfindungsgemäßen Färbeverfahren wird der während des Färbens durch Luftkontakt in den Luftgängen und an der Färbebadoberfläche oxidierte Anteil an Leukoindigo durch elektrochemische Reduktion in Gegenwart eines Mediatorsystems wieder in die reduzierte Form zurückgeführt.

Die Elektroden können dabei aus den gängigen Materialien wie Edelstahl, Titan, Blei bestehen, bevorzugt ist beispielsweise Kupfer.

Das Elektrodenpotential wird so hoch eingestellt, daß die Entwicklung von Wasserstoff an der Kathode vermieden wird, die Regel neration des Mediatorsystems aber gewährleistet wird, wobei die Elektronentransferüberspannungen zu berücksichtigen sind.

Als Mediatoren eignen sich reversible anorganische und organische Redoxsysteme, deren Redoxpotential kathodischer als das für die Reduktion von Indigo notwendige Potential von ca. -600 mV liegt.

Das Arbeitspotential kann vorteilhaft über eine Referenzelektrode kontrolliert und eingestellt werden. Bei der Verwendung von Kupferelektroden ist es nach oben auf ca. 1,1 V begrenzt. Üblicherweise wird man daher bei einem Potential von 600 bis 1100 mV arbeiten.

Beispiele für geeignete organische Mediatoren sind chinoide Verbindungen wie Anthrachinonsulfonsäuren und Hydroxyanthrachinone. In der Regel werden Konzentrationen von 0,5.10⁻³ bis 3.10⁻³, bevorzugt um 1,5·10⁻³ mol organischer Mediator/l Färbebad verwendet.

Beispiele für geeignete anorganische Mediatoren sind Übergangsmetallkomplexsalze. Bevorzugt ist hier ein System aus Eisen (II/ III)/Triethanolamin/Natronlauge im ungefähren Gewichtsverhältnis von 1 : 8 : 16 mit einem Potential bis etwa -980 mV. Übliche Konzentrationen liegen bei 0,2 bis 2, bevorzugt 0,4 bis 0,8 g FeSO₄/l Färbebad.

Bei dieser Ausführungsform des erfindungsgemäßen Verfahrens ist besonders vorteilhaft, daß aufgrund der guten elektrischen Leitfähigkeit der Färbeflotte beim Einsatz der durch Hydrierung erhaltenen Leukoindigolösung auf umweltbelastende Zusätze von Leitsalzen wie Natriumsulfat verzichtet werden kann. Es werden weiterhin lediglich geringe Mengen an Natronlauge benötigt, um den zum Färben optimalen pH-Wert einzustellen.

Zum Vergleich seien die elektrischen Leitfähigkeiten eines in der WO 90/15182 beschriebenen Färbesystems (V) aus

| | | | | | |
|---|---|---|---|---|---|
| | 1,4 g/l | NaOH | | | |
| a) | 30 g/l | Na₄SO₄ | b) | 0 g/l | Na₂SO₄ |
| | 4 g/l | Triethanolamin | | | |
| | 0,5 g/l | FeSO₄·7H₂O | | | |
| | 2 g/l | Brillantindigo | | | |

und erfindungsgemäßer Färbesysteme (Ia bis f)

| | |
|---|---|
| 1,4 g/l | NaOH |
| 4 g/l | Triethanolamin |
| 0,5 g/l | FeSO₄·7H₂O |
| x g/l | Leukoindigo-Natriumsalz |

in der folgenden Tabelle gegenüberstellt.

| Färbesystem | x g/l Leukoindigo-Na-Salz | Leitfähigkeit [mScm⁻¹] |
|---|---|---|
| Ia | 3,9 | 10,0 |
| Ib | 7,7 | 11,7 |
| Ic | 11,3 | 13,2 |
| Id | 14,8 | 14,7 |
| Ie | 21,4 | 17,5 |
| If | 33,3 | 23,8 |
| Va | - | 37,5 |
| Vb | - | 8,0 |

Auch ohne den Einsatz von Natriumsulfat als Leitsalz ergeben sich in den erfindungsgemäßen Färbesystemen insbesondere bei den bevorzugten Leukoindigogehalten von 7 bis 35 g/l (besonders bevorzugt sind 8 bis 15 g/l) ausreichende Leitfähigkeiten von > 11 mScm⁻¹.

Um bei einem Vergleichsfärbesystem der WO 90/15182 ohne Zusatz von Natriumsulfat dieselbe Ladungsmenge umzusetzen, wäre eine bis zu dreifach höhere Spannung bzw. Elektrodenoberfläche bei verminderter Stromdichte erforderlich. Die Folge wäre ein bis zu drei' fach höherer Energieverbrauch.

Aufgrund der Verwendung des vorreduzierten Indigos muß nur der durch Luftkontakt während des Färbens entstehende Anteil an oxidiertem Leukoindigo wieder reduziert werden. Da das Ausmaß an Luftkontakt durch die verwendete Färbeanlage bestimmt wird, sind Maschinentypen, bei denen kleine Färbebadoberflächen, eine geringe Anzahl von Quetschwerken und kurze Luftwege vorliegen, bevorzugt.

Besonders bevorzugt sind die Breitfärbeanlagen (Slasher), bei denen eine Garnschar von ca. 4000 Fäden (Nm 12) gleichmäßig über die Arbeitsbreite verteilt ist.

Unter diesen ist insbesondere eine Loopdye®-Anlage (Fa. Looptex, Lugano, CH) zu nennen, bei der nur ein Färbetrog mit zudem geringem Badvolumen und nur ein Quetschwerk verwendet werden.

Bei der Verwendung einer Loopdye-Anlage ist zur Reduktion des durch Luftkontakt entstehenden Indigos üblicherweise eine Nachsatzmenge von 40 g 90 %igem Natriumdithionit pro min (Garndurchsatz 13 kg/min, Indigoeinsatz 2 %) erforderlich, bei Verwendung einer Slasher-Anlage mit üblichem Badvolumen werden ca. 80 g 90 %iges Natriumdithionit/min benötigt.

Nach Umrechnung in elektrochemische Äquivalente ist beim Einsatz von vorreduziertem Indigo im Fall der Loopdye-Anlage ein Strom von insgesamt 821 A und im Fall der Slasher-Anlage von insgesamt 1334 A erforderlich. Wird hingegen nicht vorreduzierter Indigo eingesetzt, so werden auch bei Verwendung einer Loopdye-Anlage 5130 A zum Färben benötigt.

Zweckmäßigerweise geht man bei dieser Ausführungsform des erfindungsgemäßen Färbeverfahrens so vor, daß man die Färbeflotte durch eine Durchflußelektrolysezelle, die aus mehreren Teilzellen bestehen kann, deren Kathoden- und Anodenräume jeweils durch ein Diaphragma getrennt sind und deren Elektroden monopolar oder in Reihe geschaltet werden können. Die Fläche der Elektroden ist dabei so zu bemessen, daß bei maximaler Stromdichte und einem Arbeitspotential unterhalb des H₂-Entwicklungspotentials genügend elektrochemische Reduktionsäquivalente zur Regenerierung des Leukoindigos zur Verfügung stehen.

Mit Hilfe des erfindungsgemäßen Färbeverfahrens werden brillante, dem herkömmlichen Färben mit Indigo vergleichbare Färbungen in einer die Umwelt deutlich geringer belastenden Weise erhalten. Durch die Verringerung des Bedarfs an Natriumdithionit ergibt sich eine niedrige Sulfatbelastung des Abwassers von ca. 1500 mg/l und ein dementsprechend verringerter Verbrauch an Natriumhydroxid. Eine Abwasserbelastung durch oxidierbare organische Substanzen wie bei der Verwendung von durch Melasse stabilisierten Leukoindigopräparationen entfällt. Ein weiterer verfahrenstechnischer Vorteil besteht in einer höheren Flexibilität in der Produktion, da im Gegensatz zur Verwendung von unverküptem Indigo keine auf den jeweiligen Artikel und die zu färbende Menge abgestimmte Stammküpe hergestellt werden muß. Vielmehr können gleichzeitig mehrere Färbeanlagen mit unterschiedlichen Produktionen aus einem Vorratstank mit Leukoindigolösung bedient werden.

Eine weitere Reduktion der Sulfatbelastung des Färbeabwassers kann mit Hilfe der besonderen Ausführungsform des erfindungsgemäßen Färbeverfahrens erreicht werden, bei der der während des Färbens durch Luftkontakt reoxidierte Anteil des Leukoindigos nicht mit einem Reduktionsmittel wie Natriumdithionit, sondern elektrochemisch unter Verwendung eines Mediatorsystems reduziert wird. Etwaige Abwasserbelastungen ergeben sich hier höchstens durch das ohnehin nur in geringen Mengen eingesetzte Mediatorsystem.

### Beispiele

### Beispiel 1

Kontinuierliches Färben in einer Breitfärbeanlage

| | |
|---|---|
| Garn: | Baumwollgarn |
| Garnfeinheit: | Nm 12 (12 km/kg Garn) |
| Anzahl der Fäden: | 4080 |
| Geschwindigkeit: | 35 m/min |
| Indigoeinsatz: | 2 % (bezogen auf das Garngewicht) |
| Garndurchsatz: | 11,7 kg/min |
| Partielänge: | 23 000 m |
| Färbebadvolumen: | 1500 l |

Das Färbebad (1500 1; 7 g/l Leukoindigo) wurde durch Mischen von 1200 l Wasser, 3 l Natronlauge 38° Bé, 3 kg Natriumdithionit (ca. 90 %ig) und 52,5 kg 20 gew.-%iger wäßriger Leukoindigolösung mit einem Natriumhydroxidgehalt von 4,8 Gew.-% angesetzt.

Während des Färbens wurden Leukoindigolösung, Natronlauge und Hydrosulfit dem Verbrauch entsprechend nachdosiert.

Nach dem Färben wurde das Garn in der üblichen Weise gespült und weiterbehandelt.

Farbton, Echtheiten und Warenbild nach dem Waschen der konfektionierten Teile entsprachen dem Standard.

Bei einem Spülwasserverbrauch von 3000 1/h ergab sich im Abwasser eine Sulfatkonzentration von 1,5 g/l.

### Vergleichsbeispiel 1 A

Die Färbung wurde analog Beispiel 1 unter Verwendung von pulverförmigem Indigo (99 gew.-%ig) durchgeführt.

Dabei wurden 1000 l Nachsatzküpe folgendermaßen angesetzt:

650 l Wasser, 1 kg eines handelsüblichen Dispergiermittels (in 10 l heißem Wasser gelöst), 68 kg Indigo und 100 l Natronlauge 38° Bé wurden unter Rühren gemischt. Nach Auffüllen mit Wasser auf 900 l wurden 67 kg Natriumdithionit (ca. 90 %ig) in 10 min zugegeben. Nach Auffüllen mit Wasser auf 1000 l wurde 3,5 h bei Raumtemperatur verküpt.

Das Färbebad wurde wie in Beispiel 1, jedoch unter Zusatz von 154 l der Nachsatzküpe angesetzt.

Es wurde eine gleichwertige Färbung erhalten, jedoch lag die Sulfatbelastung des Abwassers bei 5,2 g/l.

### Vergleichsbeispiel 1 B

Die Färbung wurde analog Beispiel 1 unter Verwendung von einer durch Melasse stabilisierten 60 gew.-%igen Leukoindigopräparation (25 Gew.-% Melasse, 15 Gew.-% Natriumhydroxid) durchgeführt.

Das Färbebad (1500 l) wurde durch Mischen von 1200 l Wasser, 2 l Natronlauge 38° Bé, 3 kg Natriumdithionit (ca. 90 %ig) und 17,5 kg der Leukoindigopräparation angesetzt.

Für 1000 l Nachsatzküpe wurden 114 kg der Leukoindigopräparation und 72 l Natronlauge 38° Bé verwendet.

Das Redoxpotential im Färbebad lag bei -620 mV im Gegensatz zu -780 mV beim herkömmlichen Verfahren (Vergleichsbeispiel 1 A).

Es wurde kein dem Standard entsprechendes Färbeergebnis erhalten, nach dem Waschen der konfektionierten Teile ergab sich ein verwaschenes Warenbild.

Der CSB-Wert des Abwassers lag bei 8000 mg/l.

### Beispiel 2

Kontinuierliches Färben in einer Kabelfärbeanlage

| | |
|---|---|
| Garn: | Baumwollgarn |
| Garnfeinheit: | Nm 12 (12 km/kg Garn) |
| Anzahl der Fäden: | 8160 (24 Kabel à 340 Fäden) |
| Geschwindigkeit: | 25 m/min |
| Indigoeinsatz: | 2 % (bezogen auf das Garngewicht) |
| Garndurchsatz: | 17 kg/min |
| Partielänge: | 12 000 m |
| Färbebadvolumen: | 24 000 l |

Das Färbebad (24 000 l; 2 g/l Leuko-Indigo) wurde durch Mischen von 20 000 l Wasser, 36 l Natronlauge 38° Bé, 36 kg Natriumdithionit (ca. 90 %ig) und 240 kg der Leukoindigolösung aus Beispiel 1 angesetzt. 5

Während des Färbens wurden Leukoindigolösung, Natronlauge und Hydrosulfit dem Verbrauch entsprechend nachdosiert.

Nach dem Färben wurde das Garn in der üblichen Weise gespült und weiterbehandelt.

Farbton, Echtheiten und Warenbild nach dem Waschen der konfektionierten Teile entsprachen dem Standard.

Bei einem Spülwasserverbrauch von 9000 l/h ergab sich im Abwasser eine Sulfatkonzentration von 1,6 g/l.

### Vergleichsbeispiel 2 A

Die Färbung wurde analog Beispiel 2 unter Verwendung des pulverförmigen Indigos aus Beispiel 1 A durchgeführt.

Dabei wurden 2000 l Nachsatzküpe analog Beispiel 1A durch Einsatz von 2 kg eines handelsüblichen Dispergiermittels, 134 kg Indigo, 244 l Natronlauge 38° Bé und 180 kg Natriumdithionit (ca. 90 %ig) angesetzt.

Das Färbebad wurde wie in Beispiel 2, jedoch unter Zusatz von 716 l der Nachsatzküpe angesetzt.

Es wurde eine gleichwertige Färbung erhalten, jedoch lag die Sulfatbelastung des Abwassers bei 3,4 g/l.

## Patentansprüche

1. Verfahren zum Färben von cellulosehaltigem Textilmaterial mit Indigo, dadurch gekennzeichnet, daß man hierfür eine wäßrige Lösung von durch katalytische Hydrierung hergestelltem Leukoindigo verwendet und diesen nach dem Aufziehen auf das Textilmaterial in üblicher Weise durch Luftoxidation wieder in die Pigmentform überführt.

2. Verfahren nach Anspruch 1, dadurch gekennzeichnet, daß die Leukoindigolösung 10 bis 35 Gew.-% Leukoindigo enthält.

3. Verfahren nach Anspruch 1 oder 2, dadurch gekennzeichnet, daß die Leukoindigolösung 2 bis 10 Gew.-% Alkali enthält.

4. Verfahren nach den Ansprüchen 1 bis 3, dadurch gekennzeichnet, daß die Leukoindigolösung 2 bis 10 Gew.-% Natriumhydroxid enthält.

5. Verfahren nach den Ansprüchen 1 bis 4, dadurch gekennzeichnet, daß man den während des Färbens durch Luftkontakt oxidierten Anteil des Leukoindigos in der Färbeflotte unter Verwendung eines Mediatorsystems elektrochemisch reduziert.

6. Verfahren nach Anspruch 5, dadurch gekennzeichnet, daß man als Mediator Übergangsmetall enthaltende Komplexverbindungen einsetzt.

7. Verfahren nach Anspruch 5, dadurch gekennzeichnet, daß man als Mediator unter den Färbebedingungen weitgehend reversible organische Redoxsysteme einsetzt.

## Claims

1. A process for dyeing cellulosic textile material with indigo which comprises using an aqueous solution of leuco indigo prepared by catalytic hydrogenation and, after the leuco indigo has gone onto the textile material, converting it back into the pigment form in a conventional manner by air oxidation.

2. A process as claimed in claim 1 wherein the leuco indigo solution includes from 10 to 35% by weight of leuco indigo.

3. A process as claimed in claim 1 or 2 wherein the leuco indigo solution includes from 2 to 10% by weight of alkali.

4. A process as claimed in any of claims 1 to 3 wherein the leuco indigo solution includes from 2 to 10% by weight of sodium hydroxide.

5. A process as claimed in any of claims 1 to 4 wherein the leuco indigo oxidized during dyeing by air contact is electrochemically reduced in the dyeing liquor using a mediator system.

6. A process as claimed in claim 5 wherein the mediator used is a transition metal complex.

7. A process as claimed in claim 5 wherein the mediator used is an organic redox system which is substantially reversible under the dyeing conditions.

## Revendications

1. Procédé de teinture d'une matière textile contenant de la cellulose avec de l'indigo, caractérisé en ce que, à cette fin, on utilise une solution aqueuse de leuco-indigo préparé par hydrogénation catalytique et on reconvertit ce dernier en la forme pigmentaire par oxydation à l'air après sa montée sur la matière textile.

2. Procédé suivant la revendication 1, caractérisé en ce que la solution de leuco-indigo contient 10 à 35% en poids de leuco-indigo.

3. Procédé suivant la revendication 1 ou 2, caractérisé en ce que la solution de leuco-indigo contient 2 à 10 en poids d'alcali.

4. Procédé suivant l'une quelconque des revendications 1 à 3, caractérisé en ce que la solution de leuco-indigo contient 2 à 10% en poids d'hydroxyde de sodium.

5. Procédé suivant les revendications 1 à 4, caractérisé en ce que l'on réduit électrochimiquement la partie du leuco-indigo oxydée par contact avec l'air dans le bain de teinture en recourant à l'emploi d'un système médiateur.

6. Procédé suivant la revendication 5, caractérisé en ce que l'on utilise, à titre de médiateur, des composés complexes contenant un métal de transition.

7. Procédé suivant la revendication 5, caractérisé en ce que l'on utilise, à titre de médiateur, des systèmes redox organiques en grande partie réversibles dans les conditions de la teinture.
